# EUROPEAN PATENT SPECIFICATION

(11) **EP 3 320 542 B1**
(45) Date of publication and mention of the grant of the patent: **24.02.2021**
(21) Application number: 16747923.7
(22) Date of filing: 27.06.2016
(51) Int. Cl.: H01B 3/46, H01B 3/12, H01B 7/02, H01B 7/04, H02K 3/30, H02K 3/40, C04B 41/45

(54) **INSULATED WINDINGS AND METHODS OF MAKING THEREOF**
ISOLIERTE WINDUNGEN UND VERFAHREN ZUR HERSTELLUNG DAVON
ENROULEMENTS ISOLÉS ET LEURS PROCÉDÉS DE FABRICATION

(30) Priority: 10.07.2015 US 201514796005
(43) Date of publication of application: 16.05.2018
(73) Proprietor: General Electric Company, Schenectady, NY 12345 (US)
(72) Inventor: YIN, Weijun, Niskayuna, NY 12309 (US); YIN, Ming, Niskayuna, NY 12309 (US); GASCOYNE, David, Gilles, Niskayuna, NY 12309 (US); RUBINSZTAJN, Slawomir, Niskayuna, NY 12309 (US); VENKATARAMANI, Venkat Subramaniam, Niskayuna, NY 12309 (US); TAN, Daniel Qi, Niskayuna, NY 12309 (US)
(74) Representative: BRP Renaud & Partner mbB Rechtsanwälte Patentanwälte Steuerberater
(86) International application number: PCT/US2016/039489
(87) International publication number: WO 2017/011174

(56) References cited:
- WO-A1-2013/043978
- WO-A2-2013/090428
- DE-A1- 4 323 229
- US-A1- 2012 269 660

## Description

### FIELD

The invention generally relates to insulated windings and methods for making the windings. Such windings are resistant to high temperature and high voltage, and may be useful for a variety of high temperature electrical submersible pump (ESP) applications.

### BACKGROUND

WO 2013/090428 A2 discloses a litz wire including a plurality of twisted strands of composite magnet wire with a nanocoating on their outer surface.

The global increase in demand for energy has necessitated exploration of resources such as shale, oil sand, or subsea environment to procure oil and gas using various technologies, such as steam assisted gravity drainage (SAGD). Artificial lift using ESP technology is commonly used to retrieve fluids from deep wells. The motors that drive the ESPs (ESP motors) are typically submersed in the fluid in a deep well, wherein the fluid may be a mixture of crude oil, brine, and sour gas; and the temperature of the fluid may reach up to 300°C. The ESP motor performance and its reliability may be limited by the thermal stability and chemical resistance of the currently available electrical insulation systems used in windings. Therefore, a thermally stable and chemically resistant electrical insulation system that is mechanically viable for use in an ESP motor may be desirable.

For electrical insulation of ESP motor windings, commercially available flexible ceramic coatings can be used. However, the commercially available ceramic coating is usually thin, unstable to high voltage (e.g., more than hundred volts) and unable to provide dielectric capability required by ESP motors (e.g., 5 to 8 kV breakdown voltage). Though a thicker ceramic coating can improve the breakdown voltage, it has a tendency to generate cracks during the winding manufacturing process. In contrast, the available polymeric coatings are flexible for winding. However, the thermal stability of polymeric coatings may be limited to 250°C for long-term applications.

Thus, an electrically insulating coating system for an ESP motor that has the thermal stability and chemical resistance of ceramics, and mechanical flexibility and dielectric strength of the polymers is desirable. Further, an improved method of making an electrically insulating coating system for a winding that can meet both the thermal and mechanical requirements is also desirable.

### BRIEF DESCRIPTION

In one embodiment, an insulated winding as defined in claim 1 is provided. The insulated winding includes (a) an electrically conductive core; (b) an electrically insulating non-porous ceramic coating disposed on the conductive core; and (c) a composite silicone coating including a plurality of electrically insulating filler particles disposed on the ceramic coating.

In another embodiment, an insulated winding includes (a) an electrically conductive core; (b) an electrically insulating non-porous ceramic coating disposed on the conductive core, wherein the non-porous ceramic coating incudes an aluminum magnesium phosphate, a potassium silicate, or a combination thereof; (c) a silicone coating disposed on the ceramic coating; and (d) a protective coating disposed on the silicone coating, wherein the protective coating incudes glass impregnated with silazane.

In one embodiment, a method of making an insulated winding as defined in claim 15 is provided. The method includes (a) disposing a pre-ceramic material on an electrically conductive core to form a green ceramic coating; (b) disposing a composite silicone coating incuding a plurality of electrically insulating filler particles on the green ceramic coating to form a pre-shaped winding; and (c) heating the pre-shaped winding to substantially cure the pre-ceramic material and form the insulated winding.

### BRIEF DESCRIPTION OF THE DRAWING

These and other features, aspects, and advantages of the present invention will become better understood when the following detailed description is read with reference to the accompanying drawings in which like characters represent like parts throughout the drawings, wherein:
FIG. 1 is a cross sectional view of an insulated winding, in accordance with one embodiment of the invention.
FIG. 2 is a cross sectional view of an insulated winding, in accordance with one embodiment of the invention.
FIG. 3 is a cross sectional view of an insulated winding, in accordance with one embodiment of the invention.
FIG. 4 is a cross sectional view of an insulated winding, in accordance with one embodiment of the invention.
FIG. 5 is a cross sectional view of an insulated winding, in accordance with one embodiment of the invention.
FIG. 6 is a cross sectional view of an insulated winding, in accordance with one embodiment of the invention.
FIG. 7 is a schematic representation of different insulated winding configurations, in accordance with some embodiments of the invention.

### DETAILED DESCRIPTION

In the following specification and the claims, reference will be made to a number of terms, which shall be defined to have the following meanings.

As used herein, the term "coating" refers to a material disposed on at least a portion of an underlying surface in a continuous or discontinuous manner. Further, the term "coating" does not necessarily mean a uniform thickness of the disposed material, and the disposed material may have a uniform or a variable thickness. The term "coating" may refer to a single layer of the coating material or may refer to a plurality of layers of the coating material. The coating material may be the same or different in the plurality of layers.

The term coating is not limited by size; the coating-area can be as large as an entire device or as small as a specific functional area. Unless otherwise indicated, coating can be formed by any conventional deposition technique, including vapor deposition, liquid deposition (continuous and discontinuous techniques), and thermal transfer. Continuous deposition techniques, include but are not limited to, spin coating, gravure coating, curtain coating, dip coating, slot-die coating, spray coating, and continuous nozzle coating. Discontinuous deposition techniques include, but are not limited to, ink jet printing, gravure printing, and screen printing.

As used herein, the term "disposed on" refers to layers or coatings disposed directly in contact with each other or indirectly by having intervening layers there between, unless otherwise specifically indicated. The term "depositing on" refers to a method of laying down material in contact with an underlying or adjacent surface in a continuous or discontinuous manner. The term "adjacent" as used herein means that the two materials or coatings are disposed contiguously and are in direct contact with each other.

As used herein, the term "electrically conductive" refers to a material having an electrical conductivity greater than 10⁶ s/m.

As used herein, the term "electrically insulating" refers to a material having an electrical resistivity greater than 10¹⁰ Ohm-m.

As used herein the term "electrically insulating filler" refers to a material, for example in a particulate form, which may be added to a binder material to improve the insulation properties of the binder.

As used herein, the term "ceramic", refers to an inorganic solid incuding metal, nonmetal or metalloid atoms primarily held in ionic and covalent bonds. The crystallinity of ceramic materials ranges from highly oriented to semi-crystalline, and often completely amorphous (e.g., glasses). In contrast to ceramics, the "ceramifiable polymers" may be broadly defined as inorganic polymers or precursors thereof, which solidify at high temperatures to produce refractory ceramics.

As used herein, the term "non-porous" refers to a coating that is substantially devoid of "pores", such that the coating can resist penetration of any undesirable material through the coating to contact the surface on which the coating is deposited. For example, a non-porous ceramic coating deposited on a conductor surface can resist oxygen permeation through the coating and protect the conductor surface from oxidizing at high temperature.

As used herein the term "aliphatic radical" refers to an organic radical having a valence of at least one consisting of a linear or branched array of atoms which is not cyclic. Aliphatic radicals are defined to include at least one carbon atom. The array of atoms including the aliphatic radical may include heteroatoms such as nitrogen, sulfur, silicon, selenium and oxygen or may be composed exclusively of carbon and hydrogen. For convenience, the term "aliphatic radical" is defined herein to encompass, as part of the "linear or branched array of atoms which is not cyclic" a wide range of functional groups such as alkyl groups, alkenyl groups, alkynyl groups, haloalkyl groups, conjugated dienyl groups, alcohol groups, ether groups, aldehyde groups, ketone groups, carboxylic acid groups, acyl groups (for example carboxylic acid derivatives such as esters and amides), amine groups, nitro groups, and the like. For example, the 4-methylpent-1-yl radical is a C₆ aliphatic radical including a methyl group, the methyl group being a functional group which is an alkyl group. Similarly, the 4-nitrobut-1-yl group is a C₄ aliphatic radical including a nitro group, the nitro group being a functional group. An aliphatic radical may be a haloalkyl group which includes one or more halogen atoms which may be the same or different. Halogen atoms include, for example; fluorine, chlorine, bromine, and iodine. Aliphatic radicals including one or more halogen atoms include the alkyl halides trifluoromethyl, bromodifluoromethyl, chlorodifluoromethyl, hexafluoroisopropylidene, chloromethyl, difluorovinylidene, trichloromethyl, bromodichloromethyl, bromoethyl, 2-bromotrimethylene (e.g., - CH₂CHBrCH₂-), and the like. Further examples of aliphatic radicals include allyl, aminocarbonyl (i.e., -CONH₂), carbonyl, 2,2-dicyanoisopropylidene (i.e., -CH₂C(CN)₂CH₂-), methyl (i.e., -CH₃), methylene (i.e., CH₂-), ethyl, ethylene, formyl (i.e.,-CHO), hexyl, hexamethylene, hydroxymethyl (i.e.,-CH₂OH), mercaptomethyl (i.e., CH₂SH), methylthio (i.e., -SCH₃), methylthiomethyl (i.e., -CH₂SCH₃), methoxy, methoxycarbonyl (i.e., CH₃OCO-), nitromethyl (i.e., -CH₂NO₂), thiocarbonyl, trimethylsilyl (i.e., (CH₃)₃Si-), t-butyldimethylsilyl, 3-trimethyoxysilylpropyl (i.e., (CH₃O)₃SiCH₂CH₂CH₂-), vinyl, vinylidene, and the like. By way of further example, a C₁-C₁₀ aliphatic radical contains at least one but no more than 10 carbon atoms. A methyl group (i.e., CH₃-) is an example of a C₁ aliphatic radical. A decyl group (i.e., CH₃(CH₂)₉-) is an example of a C₁₀ aliphatic radical.

As used herein, the term "aromatic radical" refers to an array of atoms having a valence of at least one including at least one aromatic group. The array of atoms having a valence of at least one including at least one aromatic group may include heteroatoms such as nitrogen, sulfur, selenium, silicon and oxygen, or may be composed exclusively of carbon and hydrogen. As used herein, the term "aromatic radical" includes but is not limited to phenyl, pyridyl, furanyl, thienyl, naphthyl, phenylene, and biphenyl radicals. As noted, the aromatic radical contains at least one aromatic group. The aromatic group is invariably a cyclic structure having 4n+2 "delocalized" electrons where "n" is an integer equal to 1 or greater, as illustrated by phenyl groups (n = 1), thienyl groups (n = 1), furanyl groups (n = 1), naphthyl groups (n = 2), azulenyl groups (n = 2), anthraceneyl groups (n = 3) and the like. The aromatic radical may also include nonaromatic components. For example, a benzyl group is an aromatic radical, which includes a phenyl ring (the aromatic group) and a methylene group (the nonaromatic component). Similarly a tetrahydronaphthyl radical is an aromatic radical including an aromatic group (C₆H₃) fused to a nonaromatic component - (CH₂)₄-. For convenience, the term "aromatic radical" is defined herein to encompass a wide range of functional groups such as alkyl groups, alkenyl groups, alkynyl groups, haloalkyl groups, haloaromatic groups, conjugated dienyl groups, alcohol groups, ether groups, aldehyde groups, ketone groups, carboxylic acid groups, acyl groups (for example carboxylic acid derivatives such as esters and amides), amine groups, nitro groups, and the like. For example, the 4-methylphenyl radical is a C₇ aromatic radical including a methyl group, the methyl group being a functional group which is an alkyl group. Similarly, the 2-nitrophenyl group is a C₆ aromatic radical including a nitro group, the nitro group being a functional group. Aromatic radicals include halogenated aromatic radicals such as 4-trifluoromethylphenyl, hexafluoroisopropylidenebis(4-phen-1-yloxy) (i.e., OPhC(CF₃)₂PhO- ), 4-chloromethylphen-1-yl, 3-trifluorovinyl-2-thienyl, 3-trichloromethylphen-1-yl (i.e., 3-CC₃Ph-), 4-(3-bromoprop-1-yl)phen-1-yl (i.e., 4-BrCH₂CH₂CH₂Ph-), and the like. Further examples of aromatic radicals include 4-allyloxyphen-1-oxy, 4-aminophen-1-yl (i.e., 4-H₂NPh-), 3-aminocarbonylphen-1-yl (i.e., NH₂COPh-), 4-benzoylphen-1-yl, dicyanomethylidenebis(4-phen-1-yloxy) (i.e., -OPhC(CN)₂PhO-), 3-methylphen-1-yl, methylenebis(4-phen-1-yloxy) (i.e., -OPhCH₂PhO-), 2-ethylphen-1-yl, phenylethenyl, 3-formyl-2-thienyl, 2-hexyl-5-furanyl, hexamethylene-1,6-bis(4-phen-1-yloxy) (i.e., - OPh(CH₂)₆PhO-), 4-hydroxymethylphen-1-yl (i.e., 4-HOCH₂Ph-), 4-mercaptomethylphen-1-yl (i.e., 4-HSCH₂Ph-), 4-methylthiophen-1-yl (i.e., 4-CH₃SPh-), 3-methoxyphen-1-yl, 2-methoxycarbonylphen-1-yloxy (e.g., methyl salicyl), 2-nitromethylphen-1-yl (i.e., 2-NO₂CH₂Ph), 3-trimethylsilylphen-1-yl, 4-t-butyldimethylsilylphenl-1-yl, 4-vinylphen-1-yl, vinylidenebis(phenyl), and the like. The term "a C₃ - C₁₀ aromatic radical" includes aromatic radicals containing at least three but no more than 10 carbon atoms. The aromatic radical 1-imidazolyl (C₃H₂N₂-) represents a C₃ aromatic radical. The benzyl radical (C₇H₇-) represents a C₇ aromatic radical.

In some embodiments an insulated winding is presented. The insulated winding includes two components: an electrically conductive core and a multilayer coating system disposed on the core. In some embodiments, the multilayer coating system is a high temperature insulation coating, which may withstand a temperature of 350°C or above, and may be flexible enough for windings used for various systems, such as ESP motors. The multilayer coating may reduce coefficient of thermal expansion (CTE)-mismatch by introducing intervening layers in the coating, which may function as a buffer layer, in some embodiments. The multilayer coating may also improve one or more of adhesion, thermal stress absorption, electrical breakdown voltage, and chemical resistance of the winding, in some embodiments.

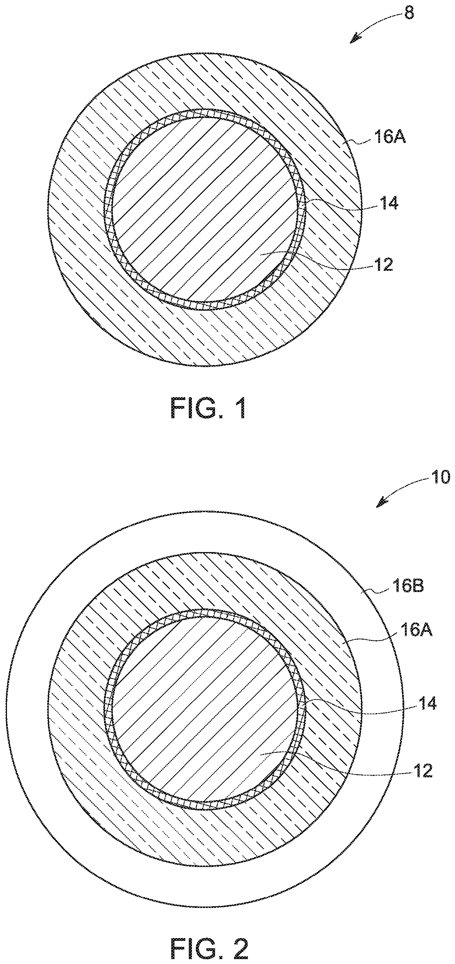

In some embodiments, the insulated winding includes (a) an electrically conductive core; (b) an electrically insulating non-porous ceramic coating disposed on the conductive core; and (c) a composite silicone coating including a plurality of electrically insulating filler particles disposed on the ceramic coating. Embodiments of the structure of the insulated winding are described in greater detail hereinafter, and further illustrated in Figures 1-4.

Fig. 1 depicts a cross-sectional view of some embodiments of the insulated winding 8, wherein an electrically insulating non-porous ceramic coating 14 is disposed on the electrically conductive core 12. A composite silicone coating 16A including a plurality of electrically insulating filler particles is further disposed on the ceramic coating 14. In the embodiment illustrated in Fig. 1, a single layer of composite silicone coating 16 A is disposed on the ceramic coating 14.

In some other embodiments, as illustrated in Fig. 2, the insulated winding 10 includes a plurality of composite silicone coatings 16A, 16B disposed on the ceramic coating 14. Each of the plurality of composite silicone coatings may have the same thickness in some embodiments. In some embodiments, at least some coatings in the plurality of composite silicone coatings may have a different thicknes. In some embodiments, each of the coating in the plurality of composite silicone coatings may have a different thickness. The thickness of each of the composite silicone coatings may be in a range from 0.5 micron to 100 microns.

In some embodiments, the concentration of the plurality of electrically insulating filler particles in at least some of the plurality of composite silicone coatings is different. In some embodiments, the concentration of the plurality of electrically insulating filler particles in each of the plurality of composite silicone coatings is different. In some embodiments, the plurality of electrically insulating filler particles are present in the plurality of composite silicone coating in an amount in a range from 5 weight percent to 50 weight percent of the total weight of the respective composite silicone coating.

The insulated winding may further include a silicone coating that is substantially free of the electrically insulating filler particles. The term "substantially free" as used herein refers to a silicone coating that includes the electrically insulating filler particles in an amount less than or equal to 0.001 weight percent of the total weight of the silicone coating. The silicone coating, which is substantially free of electrically insulating filler particles is referred to herein throughout the text as "silicone coating" to differentiate it from silicone coating including electrically insulating filler particles (referred to herein throughout the text as "composite silicone coating").

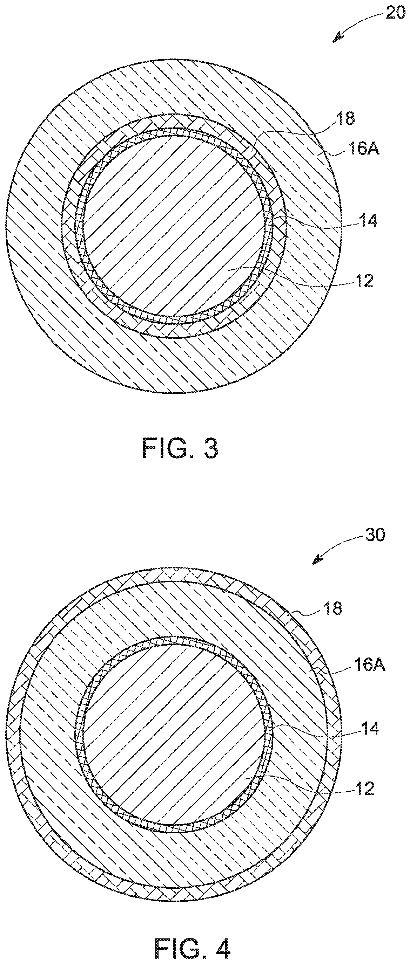

In some embodiments, as shown in Figures 3 and 4, the insulated winding 20/30 further includes a silicone coating 18. The relative location of the silicone coating and the composite silicone coating may be interchanged depending on the application of the insulated winding. For example, in the embodiment illustrated in Fig. 3, the silicone coating 18 is disposed adjacent to the ceramic coating 14 in the winding 20. In another example, as illustrated in Fig. 4, the composite silicone coating 16 A is disposed adjacent to the ceramic coating 14 in the winding 30.

Referring again to Fig. 3, in some embodiments, the insulated winding 20 includes an electrically conductive core 12, a ceramic coating 14, a silicone coating 18, and a composite silicone coating 16A, wherein the silicone coating 18 is disposed between the ceramic coating 14 and the composite silicone coating 16A. In this embodiment, the composite silicone coating 16A forms the outermost or penultimate layer (if a protective coating is present) of the winding 20, and may provide hydrolytic stability to the winding 20 in a high temperature and a high pressure environment.

In some other embodiments, a plurality of silicone coatings may be disposed between the ceramic coating 14 and the composite silicone coating 16A (not shown in figures). The plurality of silicone coatings may provide for a thicker silicone coating with improved thermal stability when compared to the stability achieved using a single silicone coating. However, a silicone coating (filler free silicone coating) having a total thickness above 30µm may not be desirable in some embodiments, as the thicker silicone coating has lower resistance to crack formation during exposure to high temperature steam. Similarly, a plurality of composite silicone coatings may be also disposed on the silicone coating 18, which increases the thickness of the composite silicone coating.

In some other embodiments, as mentioned earlier, and illustrated in Fig. 4, the insulated winding 30 includes an electrically conductive core 12, a ceramic coating 14, a silicone coating 18 and a composite silicone coating 16A, wherein the composite silicone coating 16A is disposed between the ceramic coating 14 and the silicone coating 18. In these embodiments, the silicone coating 18 forms the outermost or penultimate layer (if a protective coating is present) of the winding 30, which provides stability to the winding 30 at high temperatures. In some such embodiments, the insulated winding 30 may further include a plurality of silicone coatings disposed on the composite silicone coating, wherein the total thickness of the silicone coating may be less than 30 µm.

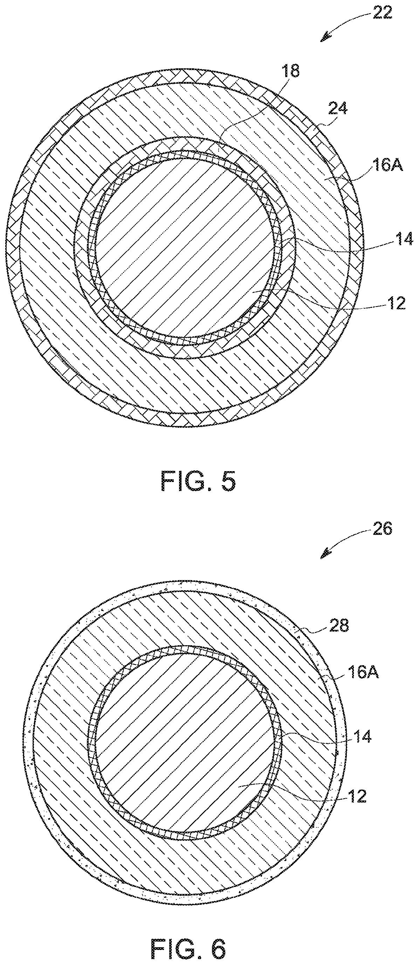

In some embodiments, the composite silicone coating 16A is disposed between two different silicone coatings 18, 24, as shown in FIG. 5. Referring to Fig. 5, a first silicone coating 18 is disposed between the ceramic coating 14 and the composite silicone coating 16A. A second silicone coating 24 is disposed on the composite silicone coating 16A. One or more intervening silicone coatings (not shown in Figures) may also be disposed between the silicone coating 18 and the composite silicone coating 16A. The intervening silicone coatings may increase the thickness of the silicone coating of the winding and provide improved thermal stability when compared to the stability achieved using two silicone coatings.

In some embodiments, the insulated winding 26 further includes a protective coating 28, as shown in Fig. 6. The protective coating 28 that forms the outermost layer of the insulated winding 26 may provide mechanical protection to the winding 28. In some embodiments, the protective coating 28 may provide for one or both of improved abrasion resistance and improved dielectric performance of the insulated winding 26.

As noted earlier, the insulated winding includes an electrically conductive core. The conductive core may include a metal or a metal alloy, non limiting examples of which include, copper, aluminum, nickel, zinc, brass, bronze, iron, silver, gold, platinum, or combinations thereof. In some embodiments, the conductive core includes a copper wire. In some embodiments, the conductive core includes an aluminum wire. The conductive core may be electrically insulated using one or more coatings deposited on the core.

Unlike the conventional electrically insulation systems that typically include only a ceramic layer, only a polymer layer, or only a polymer composite coating, embodiments of the present invention include a multilayered mixed coating system. In some embodiments, the multilayered coating system includes a combination of a ceramic coating and a polymer composite coating, which provide stability as well as flexibility to the insulated winding.

The ceramic coating includes a ceramic material, wherein the ceramic material may be present in an amorphous or a crystalline form, depending upon the composition and the processing temperature of the ceramic material. The ceramic material may include silica, metal silicates, metal oxides, aluminum silicates, aluminum phosphates, magnesium phosphates, or combinations thereof.

In some embodiments, the insulated winding includes a non-porous ceramic coating, wherein the electrically insulating non-porous ceramic coating includes one or more of aluminum phosphates, alkaline earth aluminum phosphates (such as aluminum-magnesium phosphate), or alkali silicates (such as potassium silicate (K₂SiO₃)). In some embodiments, aluminum-magnesium phosphate may be disposed on the potassium silicate (K₂SiO₃) coating or *vice versa.* The ceramic coating may be formed using solutions of phosphate salts, silicates or sol-gel solutions of K₂SiO₃, aluminum-magnesium phosphate, or a combination of K₂SiO₃ and aluminum-magnesium phosphate. In certain embodiments, the electrically insulating non-porous ceramic coating includes potassium silicate (K₂SiO3). Ceramic coatings including potassium silicate (K₂SiO₃) may be desirable in a moisture containing environment. In some embodiments, the use of alkaline earth modified aluminum phosphate, such as magnesium aluminum phosphate is desirable for one or more of its high resistivity, low ionic mobility, low oxygen permeability, and better adhesion property.

In some embodiments, the ceramic coating may be in direct contact with the conductive core. The ceramic coating may provide improved adhesion towards the conductive core (for example, copper wire) when compared to conventional insulating coating materials. In embodiments including magnesium aluminum phosphate, the ratio of Mg/Al may vary from 1:4 to 2:1. Without being bound by any theory, it is believed that the magnesium-aluminum (Mg/Al) ratio affects the adhesion of the ceramic coating towards the conductive core, such as copper. The adhesion may increase when the magnesium-aluminum (Mg/Al) ratio is less than or equal to 0.5.. Further, the ceramic coating may exhibit improved combination of Cu adhesion and barrier to oxygen permeation (e.g., to prevent Cu oxidation) when the Mg/Al ratio is between 1:4 to 1:2. The ceramic coating may provide improved density, which prevents oxidation of conductive core at elevated temperature when magnesium phosphate is mixed in aluminum phosphate sol. Without being bound by any theory it is believed that for Mg/Al ratios between 1:4 and 2:1, and particularly between 1:4 and 1:2, the ceramic coating is amorphous, and hence has a higher degree of flexibility and oxygen/water impermeability, thereby protecting the underlying conductor (e.g., Cu) from oxidation at high temperatures (> 300C).

In some embodiments, the electrically insulating non-porous ceramic coating is substantially chemically unreactive to the electrically conductive core, the composite silicone coating, the silicone coating, the electrically insulating filler particles, or combinations thereof. As used herein, the term "substantially chemically unreactive" means that a degree of chemical reactivity of the non-porous ceramic coating to the conductive core or to the other coating materials is significantly low under both the coating application process and the working condition. The degree of chemical reactivity of the ceramic is significantly low such that the ceramic is non-oxidative in oxygen environment, hydrolytically stable in water environment, and the composition remains substantially unchanged in a hydrocarbon environment. In some embodiments, the non-porous ceramic coating is completely unreactive to the conductive core or to the other coating materials. The chemical inertness (or being completely unreactive) to the core metal conductor (such as Cu) pertains to the fact that the coating forms no reaction products or interfaces that may affect the conductance of the core and/or the insulation properties of the coating. Further, the coating does not react and form products that may enhance oxidation of the core resulting in cracking or spallation of the coatings in service.

The non-porous ceramic coating may form an oxygen impermeable, electrically insulating layer on the conductive core, such as copper (Cu), and prevent oxidation of Cu even at high temperature, in some embidiments. In some embodiments, the ceramic coating may include a complex phosphate composition that provides a barrier to the core for water, oxygen and hydroxyl ion penetrate.

Thickness of the ceramic coating has an impact on the winding characteristics. For example, a thick ceramic coating may improve breakdown voltage of the winding. On the other hand, a thin ceramic coating may provide a flexible winding without generating a large number of cracks. In some embodiments, the thickness of the ceramic coating is in a range from 0.1 microns to 10 microns. In some embodiments, the ceramic coating has a thickness in a range from 1 micron to 5 microns.

The ceramic coating may provide a desired flexibility for winding process and coil manufacturing in a motor assembly. The wire coated with ceramic coating may bend in a radius of 0.5" or greater without any crack formation. In one embodiment, the wire coated with ceramic coating may bend to 0.5" radius with no cracking of ceramic layer.

As noted earlier, the insulated winding further includes a composite silicone coating. The composite silicone coating includes a matrix with a plurality of electrically insulating particles dispersed therein. The matrix includes a silicone resin. In some embodiments, the insulated winding further includes a silicone coating. The silicone coating is substantially free of the filler particles and includes a silicone resin. The silicone resin in the composite silicone coating and the silicone coating may be the same or different.

The silicone resin may include one or more disiloxy units, one or more trisiloxy units, or combinations thereof. In some embodiments, the silicone resin may include a plurality of trisiloxy units. The silicone resin, in some embodiments, is composed of disiloxy units R₂SiO_{2/2}, trisiloxy units RSiO_{3/2}, or combinations thereof, wherein R is independently at each occurrence a C₁ - C₁₀ aliphatic radical or a C₅-C₃₀ aromatic radical. In some embodiments, R is independently at each occurrence a methyl group, an ethyl group, 3,3,3-trifluoropropyl group, a phenyl group, or combinations thereof. In one embodiment, R is independently at each occurrence a methyl group or a phenyl group such that one or both of the silicone coating and the composite silicone coating includes a dimethyl silicone, methyl, phenyl silicone, or diphenyl silicone. In one embodiment, the silicone resin includes a plurality of trisiloxy units (such as methyl trisiloxy units and phenyl trisiloxy units) in an amount greater than or equal to 40 mole percent.

The silicone resin may further include reactive silanol end groups, which are cross linked to each other by an exposure to an elevated temperature. The condensation process is accelerated by catalysts, such as metal salts of carboxylic acids (e.g., Zinc 2-ethylhexanoate). Commercially available methyl-phenyl silicone resins, such as Xiameter RSN-805, Xiameter RSN-806, Xiameter RSN-409 or combination of these three, from Dow Corning, may be used for the coatings. Similar methyl-phenyl silicone resins are also available from Momentive Performance Materials, Wacker and other silicone suppliers. These materials are typically supplied as solutions in organic solvent, such as toluene or xylene. A recently developed Silres™ MSE 100 silicone resin, which is commercially available from Wacker, may be also used as the silicone resin. The cure chemistry of the silicone resin as well as physical properties of the resulting coatings may be controlled by a selection of silicone additives e.g. silanol stopped oligomers, adhesion promoters, type of catalyst, humidity level and temperature of the cure process.

The composite silicone coating, as described earlier, includes a plurality of electrically insulating filler particles. Without being bound by a theory, it is believed that the electrically insulating filler particles may provide improved hydrolytic stability at high temperature and high pressure. In some embodiments, the plurality of electrically insulating filler particles are present in the composite silicone coating in an amount in a range from 2 weight percent to 50 weight percent of the composite silicone coating. In some embodiments, the plurality of electrically insulating filler particles are present in the composite silicone coating in an amount in a range from 10 weight percent to 50 weight percent of the composite silicone coating.

In some embodiments, the plurality of electrically insulating filler particles includes mica, alumina, silica, titania, alkaline earth titanates, zirconates, aluminates, silicates, calcined talc, steatite, or combinations thereof. In some embodiments, the plurality of electrically insulating filler particles includes mica. Incorporation of the inorganic filler may further improve one or more of mechanical, thermal and electrical properties of the coating, in some embodiments. The high aspect ratio fillers such as mica and talc may be desirable for high voltage applications.

The electrically insulating filler particles may be of different shapes or sizes. Non limiting examples of filler shapes include spherical, elliptical, cuboidal, hemispherical, and platelet. The particle size of the filler particles is represented as "median particle size". Median values are defined as the value where half of the population resides above this point, and half resides below this point. For particle size distributions this median is called the D50. The electrically insulating filler particles may have a median particle size in a range from 2 µm to 100 µm. In one embodiment, the electrically insulating filler particles have a median particle size in a range from 25 to 50 µm. The particle size distribution of the electrically insulating filler particles may also be represented by an aspect ratio. In some embodiments, the electrically insulating filler particles have an aspect ratio in a range from 5 to 100. In some other embodiments, the electrically insulating filler particles may have an aspect ratio in a range of 60 to 100. In certain embodiments, the electrically insulating filler particles have an aspect ratio of 80.

In some embodiments, the filler particles are dispersed in the silicone resin to enhance the stability of the coating at a high temperature or at a high pressure. In certain embodiments, the mica fillers with median particle size of 30 µm and an aspect ratio of 80 may be effective at a loading level of about 10 weight percent to 50 weight percent. In certain embodiments, the mica-filled composite silicone, with 30 weight percent mica loading may provide the desired dielectric strength to the composite silicone coating. In certain embodiments, the composite silicone coating may provide a breakdown voltage of greater than 5KV at a temperature up to 350°C in the presence of chemical reagents, such as oil and water.

As mentioned earlier, the insulated winding may also include a protective coating, wherein the protective coating may include a glass, a ceramic, or a combination thereof. The protective coating may further include a silicone resin, a silazane resin, or a combination thereof. A glass fiber, glass tape or a ceramic tape impregnated with silicone resin or silazane (such as polysilazane) may be used for the protective coating of the insulated winding.

In some embodiments, the insulated winding can withstand a temperature of 350°C or above. Further, the insulated winding may have a breakdown voltage of 5kV or above in oil and water environment. Motors used for recovering oil and gas from natural reservoirs using SAGD and geothermal technology may employ insulated windings as described above. In some embodiments, an ESP motor includes a motor stator, wherein the motor stator includes an insulated winding as described herein. The ESP motor incuding the electrically insulated winding may improve reliability and longer operating life of the pump for SAGD application. In some embodiments, a motor stator includes the insulated winding as described herein, which may enable development of compact ESP systems with high power density for horizontal wells in various applications, such as geothermal and subsea applications.

In some embodiments, a method of making an insulated winding is also presented. In some embodiments, a method of making an insulated winding includes the steps of: (a) disposing a pre-ceramic material on an electrically conductive core to form a green ceramic coating; (b) disposing a composite silicone coating incuding a plurality of electrically insulating filler particles on the green ceramic coating to form a pre-shaped winding; and (c) heating the pre-shaped winding to substantially cure the pre-ceramic material and form the insulated winding.

The term "green ceramic coating", as used herein refers to a pre-ceramic stage of a ceramic coating formed by partial reaction of the pre-ceramic material. The term "pre-ceramic" material as used herein refers to materials that are liquid at the application temperature, and can be pyrolyzed at elevated temperatures to form a ceramic material.

The step (a) of the method may include reacting the pre-ceramic material at a temperature less than or equal to 260°C to form a solid flexible coating. The pre-ceramic coating may provide winding flexibility by disposing a pre-ceramic material on the conductor core (such as, copper wire) followed by transformation at lower temperature (equal to or less than 260°C) in a pre-ceramic stage such that it is flexible enough for formation of coil into the required shape. In some embodiments, the ceramic coating is pre-cured at 250°C and post cured at 350°C, instead of reacting at high temperature.

The partial curing at low temperature may allow the pre-ceramic material to maintain a balance between an optimum hardness and flexibility, which is sufficient to form a coil into a desired shape. In some embodiments, the first step (a) may also be performed at a lower temperature of 100°C to form a flexible pre-ceramic coating having the desired mechanical and adhesion properties.

The method further includes a second step (b), wherein the step (b) includes disposing a composite silicone coating on the green pre-ceramic coating to form a pre-shaped winding. The term "pre-shaped" winding" refers to a shape of the winding which is an immature or incomplete form of the winding. The pre-shaped winding may form as a result of an intermediary step of the method of forming an insulated winding. The step (b) may be performed at a temperature equal to or greater than 200°C, which may lead to the fully cured organic-inorganic hard coating.

In some embodiments, the step (c) includes heating the pre-shaped winding at a temperature in a range from 250°C to 500°C. The pre-shaped winding may be placed into slots in a motor stator for *in-situ* curing, followed by applying a current to the conductor core to heat the pre-shaped winding to a temperature, which may be in a range from 250°C to 500°C. The pre-shaped winding may be heated to substantially cure and form the insulated winding. The term, "substantially cure" as used herein refers to a curing process such that the elastic modulus of the silicone coating is higher than 90% of the elastic modulus of completely cured silicone coating. During this curing process, greater than or equal to 90% of the pre-ceramic material may be converted to the ceramic stage.

In some embodiments, the method further includes disposing a silicone coating on the green pre-ceramic coating or on the pre-shaped winding. In some embodiments, a plurality of silicone coatings may be deposited on the green pre-ceramic coating or on the pre-shaped winding.

The method may further include encapsulating the insulated winding with a protective coating, wherein the protective coating includes glass, ceramic, or a combination thereof.

The method may involve passing the conductor core, such as the copper wire through different chemical baths and curing stations to build the desired multilayer coating system on the conductor core. The multi-step curing process may allow formation of multilayer coatings with mechanical strength sufficient to survive a wire-manufacturing and desired winding.

### EXPERIMENTAL SECTION

### Comparative Example 1: Silicone coating on copper substrate exhibiting copper oxidation

A coating of methyl-phenyl silicone resin from Dow Corning (Xiameter 0805) was applied with a doctor blade to a piece of copper foil (copper substrate). The coated copper foil was heated to 200°C for 2 hours to remove solvent and to cross-link the silicone resin through a condensation reaction. The resulting cross-linked silicone coating was 35 micron thick. The breakdown voltage of this coating was measured while submersing the coated copper foil in Clearco STO-50 oil and applying an AC voltage at 500 V/s. The voltage at which breakdown occurred was 5.4 ±0.3 kVAC. When the coated copper foil was heated to 350 °C in air to measure the AC breakdown voltage, the coated copper foil oxidized and the silicone coating delaminated from the coil.

### Comparative Example 2 Silicone coating on aluminum substrates exhibiting low breakdown voltage

Aluminum foil coupons (aluminum substrate) were dip coated into a methyl-phenyl silicone resin solution (Xiameter RSN-0805 from Dow Corning) and the coating was dried at 80°C for 2 hours. A second layer of methyl-phenyl silicone coating was disposed on top of the first layer and the coating was dried at 80°C for 2 hours. The two-layer coating was cured at 350°C for 2 hours to remove solvent and to cross-link the silicone. The resulting coating had a thickness in a range from 16 microns to 29 microns, and had a breakdown voltage of 3.3 ±0.6 kVAC at 20°C and 0.8 ±0.5 at 350°C. The lower than expected breakdown voltage at 350°C may be explained by an observed softening of the silicone coating during the 350°C breakdown measurement.

These results suggest that a thicker coating may be needed to achieve higher breakdown voltages, and perhaps a catalyst may also be needed to completely cure the resin and prevent softening at 350°C.

### Comparative Example 3: Silicone coating of thickness above 30 microns induces cracking during hydro lytic aging

The example showed silicone coating of thickness above 30 microns on aluminum substrate induces cracking after 24 hours exposure to condensing steam at 120°C and 14 psi. 4 x 8 x 0.016 inch Aluminum coupons (aluminum substrate) were coated with methyl-phenyl silicone resin solution (Xiameter RSN-0805 from Dow Corning) containing 1 wt% of Zinc ethyl hexanoate using 3mil doctor blade applicator and the resulting coating was partially cured at 250°C for 20 minutes, and referred here as a first layer. A second layer of methyl-phenyl silicone coating was applied on top of the first layer and the coating was partially cured at 250°C for 20 minutes. The two-layer coating was completely cured at 350°C for 2 hours. The resulting coating had a thickness in a range from 20 to 30 microns (for one layer) and from 40 to 50 microns (for two layers). These coatings were subjected to a hydrolytic stability test at 120°C in a pressure cooker at 14 psi pressure (PCT) for 24 hours. All samples with thickness above 30 micron showed cracking. Room temperature break down voltage of RSN-0805 coating (thickness 22 microns) after PCT was only 1.42kV AC. These results suggest that a pure RSN-0805 silicone coating with thickness above 30 micron is not resistant to crack formation and cannot achieve break down voltage above 5kV AC.

### Example 1: Addition of ceramic coating between copper substrate and silicone coating mitigated copper oxidation

To alleviate the issue of copper oxidation, the copper foil was coated with a thin non-porous layer of potassium silicate (K₂SiO₃), which provided an oxidative barrier layer to prevent the oxidation of the copper foil. Copper foil coupons (copper substrate) were dip coated into a KASIL solution and the coating was dried at 95°C for 1 hour followed by incubation at 260°C for 1 hour. The coating was cured at 350°C for 1 hour to network a polymer-like structure. The resulting coating had a thickness in a range from 1 micron to 5 microns.

A layer of methyl-phenyl silicone resin (Dow Corning, Xiameter RSN-0805) was disposed on top of the potassium silicate coating and was cured in an oven at 210°C for 1 hour followed by a thermal conditioning at 350°C for 2 hours. The protected surface of the copper did not show any signs of oxidation. The resulting silicone coating was 3 to 7 microns thick and had a breakdown voltage of 0.29 kVAC at room temperature and was stable when heated up to 350°C for 2 hours. In order to achieve a higher AC breakdown voltage the silicone coating thickness was increased.

### Example 2: Effect of mica filler on crack resistance of silicone coating

Several formulations of RSN-0805 resin with different content of mica filler (C-3000) from Imerys were formulated. The mica filler was blended with silicone resin using high shear mixer. The final formulation was degassed for 15 minutes under vacuum. The prepared formulations were applied on 4 x 8 x 0.016 inch Aluminum coupons using 7mil doctor blade. A first layer of RSN-0805 with from 9 to 50 wt% mica was partially cured at 250°C for 20 minutes. A second layer of RSN-0805 with from 9 to 50 wt% mica was applied on a top of the first layer and the coating was partially cured at 250°C for 20 minutes. The two layered-coatings were cured at 350°C for 2 hours. The properties of the resulting two layered-coatings are summarized in Table. 1. No cracking after PCT was observed in any of the studied coatings.

These results suggest that an incorporation of even small amount of mica into RSN-0805 strongly improves resistance to cracking of the final coating. Formulations with the mica content between 17wt% and 38wt% showed the best breakdown voltage. However, two layered-coating is not sufficient to reach break down voltage of 5kV AC.

**Table 1. Effect of mica concentration on the break down voltage**

| wt% Mica in RSN-0805 | Coating thickness/ microns | kVAC at RT | SD | kVAC at 350C | SD |
|---|---|---|---|---|---|
| 0 | 23 | 1.42 | 0.68 | 1.08 | 0.68 |
| 9 | 104 | 2.86 | 1.63 | 1.29 | 0.4 |
| 17 | 110 | 2.91 | 1.81 | 2.98 | 0.62 |
| 30 | 125 | 3.58 | 1.71 | 3.1 | 0.44 |
| 38 | 130 | 3.6 | 1.15 | 3.55 | 0.55 |
| 50 | 145 | 0.15 | 0.1 | 1.03 | 0.2 |

### Example 3: Effect of layer thickness on the multilayer coating quality

Formulation of RSN-0805 with 30wt% of mica was selected for subsequent experiments. Effect of thickness of the individual layer on coating quality was also evaluated 20 using 1 mil, 3mil, 5mil, 7mil, 10mil and 15mil doctor blade (DB). The coatings were cured by heating at 350°C for 2hrs. The results are presented in Table 2. These results suggest that consistent, good quality coating of RSN-0805 with 30wt% mica can be obtained only using doctor blade applicators with size 5mil and below.

**Table 2. Effect of layer thickness on the multilayer coating quality**

| DB Applicator (mils) | layer thickness (microns) | Two layer coating quality |
|---|---|---|
| 15 | 120 | many bubbles large bubbles and delamination |
| 10 | 78 | many large bubbles |
| 7 | 65 | small bubbles |
| 5 | 40 | good, smooth coating |
| 3 | 25 | good, smooth coating |
| 1 | 15 | good, smooth coating |

### Example 4: A multi-layered coating configuration with composite silicone coating showed high electric breakdown voltage and good hydrolytic stability

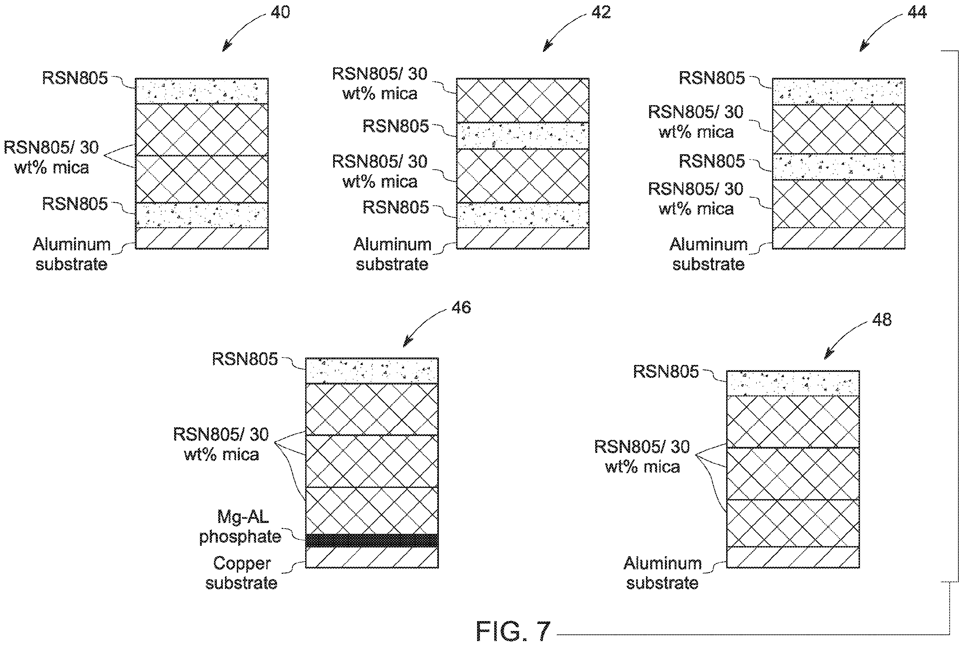

Four layered-coatings were applied to flat aluminum 4 x 8 x 0.016 inch panels using a procedure described in Example 3. The coating made of two layers of a methyl-phenyl silicone resin (RSN-0805, which is represented by "R" in Table 5) and two layers of the same methyl-phenyl silicone resin filled with 30% by weight mica particles (which is represented by "M" in Table 5). The RSN-0805 (R) layer was applied using 3mil DB applicator; RSN-0805 with 30 wt% mica (M) was applied using 5mil DB applicator. The evaluated coating configurations of RMMR (40), MRMR(42) and RMRM (44) on the aluminum substrate are depicted in the schematic in FIG. 7.

The cured samples of the coatings on aluminum substrates were exposed to 120°C condensing steam in a pressure cooker at 14 psi for 24 hours. After this hydrolytic aging, the samples did not show any sign of degradation, delamination or cracking, and maintained their high breakdown voltage when measured at both room temperature and 350°C. These data are listed in Table 3. The results suggest that four layered-coating systems with different configuration of layers and thickness 120 microns showed good break down voltage performance.

**Table 3. Effect of coating configuration on electric breakdown voltages at room temperature and 350°C after hydrolytic aging**

| Configuration | Coating thickness / microns | kV AC at RT | SD | Coating thickness / microns | kVAC at 350C | SD |
|---|---|---|---|---|---|---|
| RMMR | 120 | 6.17 | 1.93 | 121 | 4.28 | 0.76 |
| MRMR | 122 | 6.52 | 0.67 | 109 | 4.61 | 0.55 |
| RMRM | 115 | 7.52 | 1.63 | 117 | 4.67 | 0.42 |

### Example 5: Three layered-coating system of RSN-0805 with 30wt% of mica

Three layered-coatings of RSN-0805 with 30 wt% mica were applied to flat aluminum 4 x 8 x 0.16 inch panels using a procedure described in Example 3. The individual layers were applied using 3mil and 5mil DB applicators. The coating configuration with regard to use of DB applicator, such as 5-5-3 (5 mil, 5 mil, 3 mil), 5-3-5 (5 mil, 3 mil, 5 mil), and 3-5-5 (3 mil, 5 mil, 5 mil) are indicated in the Table 4. The cured samples of the coatings were exposed to 120°C condensing steam in a pressure cooker at 14 psi for 24 hours. After this hydrolytic aging, the samples did not show any sign of degradation, delamination or cracking, and maintained their high breakdown voltage when measured at both room temperature and 350°C. These data are listed in Table 4.

**Table 4. Effect of DB size on break down voltage of three layered- coating system.**

| DB Conf | Thickness (um) | SD | Voltage at RT | SD | Thickness (um) | SD | Voltage at 350°C | SD |
|---|---|---|---|---|---|---|---|---|
| 5-5-3 | 102 | 4.6 | 5.81 | 0.78 | 99.6 | 3.9 | 4.88 | 0.2 |
| 5-3-5 | 98.6 | 3.7 | 6.57 | 1.48 | 89 | 5.9 | 4.71 | 0.3 |
| 3-5-5 | 95 | 4.8 | 6.32 | 0.95 | 98 | 9.2 | 4.26 | 0.66 |

### Example 6: Copper coated with ceramic layer of magnesium aluminum phosphate (Mg/Al equal 0.25) and four layers of RSN-0805 (three with 30wt% of mica)

The 4 x 8 x 0.016 inch flat copper coupon was coated with a thin ceramic layer, such as a layer of non-porous magnesium aluminum phosphate (represented by P in Table 5), wherein the ratio of Mg/Al was equal to 0.25. The ceramic coating on the copper substrate was generated by dip coating. The coating was partially cured by heating at 200°C for 2hrs. Four layered-coating system consisting of three layers of RSN-0805 with 30 wt% mica (M) and one top layer of RSN-0805 (R) was applied to the copper coupon prepared above and to 4x8x0.016 inch aluminum coupon using a procedure described in Example 3. The evaluated coating configurations of P-M-M-M-R (46) on the Cu substrate and M-M-M-R (48) on the aluminum substrate are depicted in the schematic in FIG. 7. The individual layers of RSN-0805 with 30wt% mica were applied using 3mil DB applicator. The top layer of RSN-0805 was applied using 1 mil DB applicator. Both aluminum and copper coupons were cured at 350°C for 2 hrs. The cured coupons were exposed to 120°C condensing steam in a pressure cooker at 14 psi for 24 hours. After this hydrolytic aging, the samples did not show any delamination or cracking. The protected surface of the copper did not show any signs of oxidation. Copper and aluminum coupons after PCT showed comparable high breakdown voltage when measured at room temperature. These data are listed in Table 5.

**Table 5. Breakdown (BD) voltage and breakdown strength (BDS) of the copper coupon (coated with magnesium aluminum phosphate) and aluminum coupon coated with four layer silicone coating.**

| Coating Structure | Coating Thickness (microns) | SD (µm) | BD Voltage at RT (kVAC) | SD (kVAC) | BDS at RT (V/µm) | SD (V/µm) |
|---|---|---|---|---|---|---|
| Cu-P-M-M-M-R | 113 | 9.5 | 8.76 | 1.16 | 78 | 14 |
| Al-M-M-M-R | 110 | 8.26 | 8.33 | 1.98 | 77 | 23 |

## Claims

1. An insulated winding (8), comprising:
(a) an electrically conductive core (12);
(b) an electrically insulating non-porous ceramic coating (14) that is substantially devoid of pores such that the coating can resist penetration of any undesirable material, the coating disposed on the conductive core (12); and
(c) a composite silicone coating (16A) comprising a plurality of electrically insulating filler particles disposed on the ceramic coating (14).

2. The winding of claim 1, comprising a plurality of composite silicone coatings (16A, 16B) disposed on the ceramic coating (14).

3. The winding of claim 2, wherein a concentration of the plurality of electrically insulating filler particles in at least some of the plurality of composite silicone coatings (16A, 16B) is different.

4. The winding of claim 1, further comprising a silicone coating (18) that is substantially free of the electrically insulating filler particles.

5. The winding of claim 4, wherein the composite silicone coating (16A) is disposed between the ceramic coating (14) and the silicone coating (18).

6. The winding of claim 4, wherein the silicone coating (18) is disposed between the ceramic coating (14) and the composite silicone coating (16A).

7. The winding of claim 1, wherein the plurality of electrically insulating filler particles are present in an amount in a range from 10 weight percent to 50 weight percent of the composite silicone coating (16A).

8. The winding of claim 1, further comprising a protective coating (28), wherein the protective coating comprises a glass, a ceramic, or a combination thereof.

9. The winding of claim 1, wherein the electrically insulating non-porous ceramic coating (14) is substantially chemically unreactive to the electrically conductive core (12), the silicone coating (16A), the plurality of electrically insulating filler particles, or combinations thereof

10. The winding of claim 1, wherein the electrically insulating non-porous ceramic coating (14) comprises aluminum-magnesium phosphate.

11. The winding of claim 1, wherein the electrically insulating non-porous ceramic coating (14) comprises potassium silicate.

12. The winding of any preceding claim, wherein the non-porous ceramic coating comprises an aluminum magnesium phosphate, a potassium silicate, or a combination thereof.

13. A motor stator comprising the winding of any preceding claim.

14. An electrical submersible pump comprising the motor stator of claim 13.

15. A method of making an insulated winding, comprising:
(a) disposing a pre-ceramic material on an electrically conductive core to form a green ceramic coating;
(b) disposing a composite silicone coating comprising a plurality of electrically insulating filler particles on the green ceramic coating to form a pre-shaped winding; and
(c) heating the pre-shaped winding to substantially cure the pre-ceramic material and form the insulated winding.

## Patentansprüche

1. Isolierte Windung (8), umfassend:
(a) einen elektrisch leitfähigen Kern (12);
(b) eine elektrisch isolierende, nicht poröse Keramikbeschichtung (14), die im Wesentlichen frei von Poren ist, sodass die Beschichtung einem Eindringen von unerwünschtem Material widerstehen kann, wobei die Beschichtung auf dem leitfähigen Kern (12) angeordnet ist; und
(c) eine Verbundsilikonbeschichtung (16A), die eine Vielzahl von elektrisch isolierenden Füllstoffpartikeln umfasst, die auf der Keramikbeschichtung (14) angeordnet sind.

2. Windung nach Anspruch 1, umfassend eine Vielzahl von Verbundsilikonbeschichtungen (16A, 16B), die auf der Keramikbeschichtung (14) angeordnet sind.

3. Windung nach Anspruch 2, wobei eine Konzentration der Vielzahl von elektrisch isolierenden Füllstoffpartikeln in mindestens einigen der Vielzahl von Verbundsilikonbeschichtungen (16A, 16B) unterschiedlich ist.

4. Windung nach Anspruch 1, ferner umfassend eine Silikonbeschichtung (18), die im Wesentlichen frei von den elektrisch isolierenden Füllstoffpartikeln ist.

5. Windung nach Anspruch 4, wobei die Verbundsilikonbeschichtung (16A) zwischen der Keramikbeschichtung (14) und der Silikonbeschichtung (18) angeordnet ist.

6. Windung nach Anspruch 4, wobei die Silikonbeschichtung (18) zwischen der Keramikbeschichtung (14) und der Verbundsilikonbeschichtung (16A) angeordnet ist.

7. Windung nach Anspruch 1, wobei die Vielzahl von elektrisch isolierenden Füllstoffpartikeln in einer Menge in einem Bereich von 10 Gewichtsprozent bis 50 Gewichtsprozent der Verbundsilikonbeschichtung (16A) vorliegen.

8. Windung nach Anspruch 1, ferner umfassend eine Schutzbeschichtung (28), wobei die Schutzbeschichtung ein Glas, eine Keramik oder eine Kombination davon umfasst.

9. Windung nach Anspruch 1, wobei die elektrisch isolierende, nicht poröse Keramikbeschichtung (14) gegenüber dem elektrisch leitfähigen Kern (12), der Silikonbeschichtung (16A), der Vielzahl von elektrisch isolierenden Füllstoffpartikeln oder Kombinationen davon im Wesentlichen nicht chemisch reaktiv ist.

10. Windung nach Anspruch 1, wobei die elektrisch isolierende, nicht poröse Keramikbeschichtung (14) Aluminiummagnesiumphosphat umfasst.

11. Windung nach Anspruch 1, wobei die elektrisch isolierende, nicht poröse Keramikbeschichtung (14) Kaliumsilikat umfasst.

12. Windung nach einem der vorstehenden Ansprüche, wobei die nicht poröse Keramikbeschichtung ein Aluminiummagnesiumphosphat, ein Kaliumsilikat oder eine Kombination davon umfasst.

13. Motorstator, umfassend die Windung nach einem der vorstehenden Ansprüche.

14. Elektrische Tauchpumpe, umfassend den Motorstator nach Anspruch 13.

15. Verfahren zum Herstellen einer isolierten Windung, umfassend:
(a) Anordnen eines Vorkeramikmaterials auf einem elektrisch leitfähigen Kern, um eine Grünkeramikbeschichtung zu bilden;
(b) Anordnen einer Verbundsilikonbeschichtung, die eine Vielzahl von elektrisch isolierenden Füllstoffpartikeln umfasst, auf der Grünkeramikbeschichtung, um eine vorgeformte Windung zu bilden; und
(c) Erwärmen der vorgeformten Windung, um das Vorkeramikmaterial im Wesentlichen auszuhärten und die isolierte Windung zu bilden

## Revendications

1. Enroulement isolé (8), comprenant :
(a) un cœur électriquement conducteur (12) ;
(b) un revêtement céramique non poreux électriquement isolant (14) qui est sensiblement dépourvu de pores de telle sorte que le revêtement peut résister à une pénétration de tout matériau indésirable, le revêtement disposé sur le cœur conducteur (12) ; et
(c) un revêtement en silicone composite (16A) comprenant une pluralité de particules de charge électriquement isolantes disposées sur le revêtement céramique (14).

2. Enroulement selon la revendication 1, comprenant une pluralité de revêtements en silicone composite (16A, 16B) disposés sur le revêtement céramique (14).

3. Enroulement selon la revendication 2, dans lequel une concentration de la pluralité de particules de charge électriquement isolantes dans au moins certains de la pluralité de revêtements en silicone composite (16A, 16B) est différente.

4. Enroulement selon la revendication 1, comprenant en outre un revêtement en silicone (18) qui est sensiblement exempt de particules de charge électriquement isolantes.

5. Enroulement selon la revendication 4, dans lequel le revêtement en silicone composite (16A) est disposé entre le revêtement céramique (14) et le revêtement en silicone (18).

6. Enroulement selon la revendication 4, dans lequel le revêtement en silicone (18) est disposé entre le revêtement céramique (14) et le revêtement en silicone composite (16A).

7. Enroulement selon la revendication 1, dans lequel la pluralité de particules de charge électriquement isolantes sont présentes en une quantité dans une plage de 10 pour cent en poids à 50 pour cent en poids du revêtement en silicone composite (16A).

8. Enroulement selon la revendication 1, comprenant en outre un revêtement protecteur (28), dans lequel le revêtement protecteur comprend un verre, une céramique, ou une combinaison de ceux-ci.

9. Enroulement selon la revendication 1, dans lequel le revêtement céramique non poreux électriquement isolant (14) est sensiblement non réactif chimiquement au cœur électriquement conducteur (12), au revêtement en silicone (16A), à la pluralité de particules de charge électriquement isolantes, ou à des combinaisons de ceux-ci.

10. Enroulement selon la revendication 1, dans lequel le revêtement céramique non poreux électriquement isolant (14) comprend du phosphate d'aluminium-magnésium.

11. Enroulement selon la revendication 1, dans lequel le revêtement céramique non poreux électriquement isolant (14) comprend du silicate de potassium.

12. Enroulement selon l'une quelconque des revendications précédentes, dans lequel le revêtement céramique non poreux comprend un phosphate d'aluminium-magnésium, un silicate de potassium, ou une combinaison de ceux-ci.

13. Stator de moteur comprenant l'enroulement selon l'une quelconque des revendications précédentes.

14. Pompe submersible électrique comprenant le stator de moteur selon la revendication 13.

15. Procédé de fabrication d'un enroulement isolé, comprenant :
(a) la disposition d'un matériau précéramique sur un cœur électriquement conducteur pour former un revêtement céramique vert ;
(b) la disposition d'un revêtement en silicone composite comprenant une pluralité de particules de charge électriquement isolantes sur le revêtement céramique vert pour former un enroulement préformé ; et
(c) le chauffage de l'enroulement préformé pour durcir sensiblement le matériau précéramique et former l'enroulement isolé.
